## Europäisches Patentamt
## European Patent Office
## Office européen des brevets

(19)

(11) Numéro de publication: **0 311 471 B1**

(12) **FASCICULE DE BREVET EUROPEEN**

(45) Date de publication du fascicule du brevet:
**07.11.90**

(51) Int. Cl.⁵: **B60S 1/38**, B60S 1/52

(21) Numéro de dépôt: **88402291.4**

(22) Date de dépôt: **12.09.88**

(54) Déflecteur pour balai d'essuie-glace, et balai d'essuie-glace equipé d'un tel déflecteur.

(30) Priorité: **06.10.87 FR 8713770**

(43) Date de publication de la demande:
**12.04.89 Bulletin 89/15**

(45) Mention de la délivrance du brevet:
**07.11.90 Bulletin 90/45**

(84) Etats contractants désignés:
**DE ES GB IT**

(56) Documents cités:
**EP-A- 0 226 013**
**EP-A- 0 239 201**
**FR-A- 2 550 744**
**FR-A- 2 556 297**
**GB-A- 2 146 891**

(73) Titulaire: **VALEO SYSTEMES D'ESSUYAGE,**
**21-27 Boulevard Gambetta,**
**F-92130 Issy-les-Moulineaux(FR)**

(72) Inventeur: **Maubray, Daniel, 16 boulevard Rodin,**
**F-92130 Issy les Moulineaux(FR)**

(74) Mandataire: **Peuscet, Jacques et al, Cabinet**
**Peuscet 68, rue d'Hauteville, F-75010 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative à un déflecteur pour balai d'essuie-glace porté par un bras d'essuie-glace.

On sait que l'écoulement de l'air sur le pare-brise d'un véhicule, notamment automobile, a tendance à provoquer le soulèvement des balais d'essuie-glace et à écarter ces balais de la surface à essuyer, et cela malgré les moyens de rappel élastiques habituellement prévus pour appliquer les balais sur la surface. Ce phénomène est d'autant plus important que la vitesse du véhicule est élevée.

On a donc proposé de monter des déflecteurs d'air sur les balais ou sur les bras d'essuie-glace de manière à créer un effort aérodynamique qui tend à appliquer le balai contre la surface à essuyer. De nombreuses solutions ont été proposées ayant pour but, généralement, de créer une surpression au-dessus du déflecteur afin d'appliquer le bras et le balai contre la surface à essuyer.

FR-A 1 173 747 envisage non seulement de provoquer une surpression au-dessus du balai mais également une dépression au-dessous de ce balai. Toutefois, ce document ne concerne pas véritablement un déflecteur réalisé séparément du balai et pouvant être monté ultérieurement sur le balai, mais plutôt un balai dont l'armature ou support de raclette présente un profil particulier en vue d'assurer l'application du balai sur la surface à essuyer.

Une telle solution n'est pas adaptable à un balai existant.

L'invention a pour but de fournir un déflecteur d'air de construction simple et économique qui peut s'adapter et se monter sur des balais existants.

Selon l'invention, un déflecteur pour balai d'essuie-glace porté par un bras d'essuie-glace, du genre comportant des moyens d'accrochage sur ledit balai ou ledit bras et une partie profilée de forme globalement convexe tournée à l'opposé des moyens d'accrochage (Déflecteur du type connu, par exemple de FR-A 2 556 297), est caractérisé en ce que ladite partie profilée, sur sa face interne faisant face à la surface à essuyer, comporte une première zone sensiblement plane s'étendant depuis un bord avant vers l'arrière, faiblement inclinée par rapport au plan moyen de la surface à essuyer, et une seconde zone faisant suite à la première et limitée par un bord arrière, d'inclinaison par rapport à la surface à essuyer supérieure à l'inclinaison de la première zone.

De manière avantageuse, ladite première zone est inclinée d'un angle compris entre 4° et 20° et de préférence d'environ 8° par rapport à la surface à essuyer, tandis que ladite seconde zone est inclinée d'environ 25°.

Une telle disposition permet d'obtenir un déflecteur dont la partie profilée présente une large partie proche de la surface à essuyer ce qui a pour effet de créer un effet de sol produisant une dépression relativement importante au-dessous du déflecteur afin de plaquer le balai d'essuie-glace sur ladite surface à essuyer.

Afin d'obtenir une meilleure efficacité, les moyens d'accrochage sont prévus d'une longueur telle que la zone de la partie profilée la plus proche de la surface à essuyer se trouve à une distance $\underline{h}$ réduite de ladite surface essuyer, ladite distance $\underline{h}$ étant de préférence inférieure à la hauteur H de la raclette que porte le balai d'essuie-glace.

Les moyens d'accrochage, les moyens de liaison et la partie profilée du déflecteur peuvent former une seule pièce obtenue de moulage. Les moyens de liaison peuvent être formés par des jambes de liaison distantes l'une de l'autre, un espace existant entre les jambes de liaison.

Les moyens d'accrochage peuvent comprendre des pinces propres à s'encliqueter, notamment sur l'armature du balai d'essuie-glace.

Les moyens d'accrochage, notamment les pinces, peuvent être munis d'un logement situé à l'extérieur par rapport à l'armature du balai d'essuie-glace, tandis que la partie profilée et les moyens de liaison forment une seule pièce distincte des moyens d'accrochage, lesdits moyens de liaison comportant à leur extrémité éloignée de la partie profilée un organe ayant une section complémentaire de celle du logement des moyens d'accrochage, cet organe étant propre à être engagé et fixé, notamment par clipsage, dans ledit logement pour assurer l'assemblage des moyens d'accrochage et des moyens de liaison. Dans ce type de réalisation, la pièce unique formée par la partie profilée et les moyens de liaison peut être obtenue par extrusion.

En variante, le déflecteur peut être fabriqué en plusieurs tronçons reliés aux différents palonniers que présente le balai d'essuie-glace ce qui permet de mieux suivre le galbe de la surface à essuyer, généralement le pare-brise d'un véhicule automobile.

Le bord avant du déflecteur peut comporter un canal longitudinal interne débouchant en direction de la surface à essuyer par des buses, ce canal étant propre à être relié à un tuyau d'alimentation en un liquide de lavage de la surface à essuyer.

Un tel déflecteur est réalisé, de préférence, en matière plastique.

L'invention est également relative à un balai d'essuie-glace équipé d'un déflecteur tel que défini précédemment.

L'invention est réalisée, mises à part les dispositions exposées ci-dessus, en un certain nombre d'autres dispositions dont il sera plus explicitement question ci-après à propos de modes de réalisation particuliers décrits avec référence aux dessins ci-annexés, mais qui ne sont nullement limitatifs.

La figure 1, de ces dessins, est une vue en élévation latérale d'un balai d'essuie-glace équipé d'un déflecteur d'air selon l'invention.

La figure 2 est une section suivant la ligne II-II, figure 1 à plus grande échelle avec représentation d'une partie de la surface à essuyer.

La figure 3 montre, semblablement à la figure 2, une variante de réalisation du déflecteur.

La figure 4 est une vue en élévation latérale d'un balai d'essuie-glace équipé d'un déflecteur selon un autre mode de réalisation.

La figure 5 est une coupe suivant la ligne V-V, figure 4, à plus grande échelle.

La figure 6 est une coupe suivant la ligne VI-VI, figure 4 à plus grande échelle.

La figure 7 est une vue en perspective d'une extrémité longitudinale d'une armature de balai d'essuie-glace et de l'extrémité longitudinale associée d'un déflecteur conforme à un autre mode de réalisation.

La figure 8, enfin, montre en coupe transversale, semblablement aux figures 5 et 6, un dernier mode de réalisation du déflecteur de l'invention.

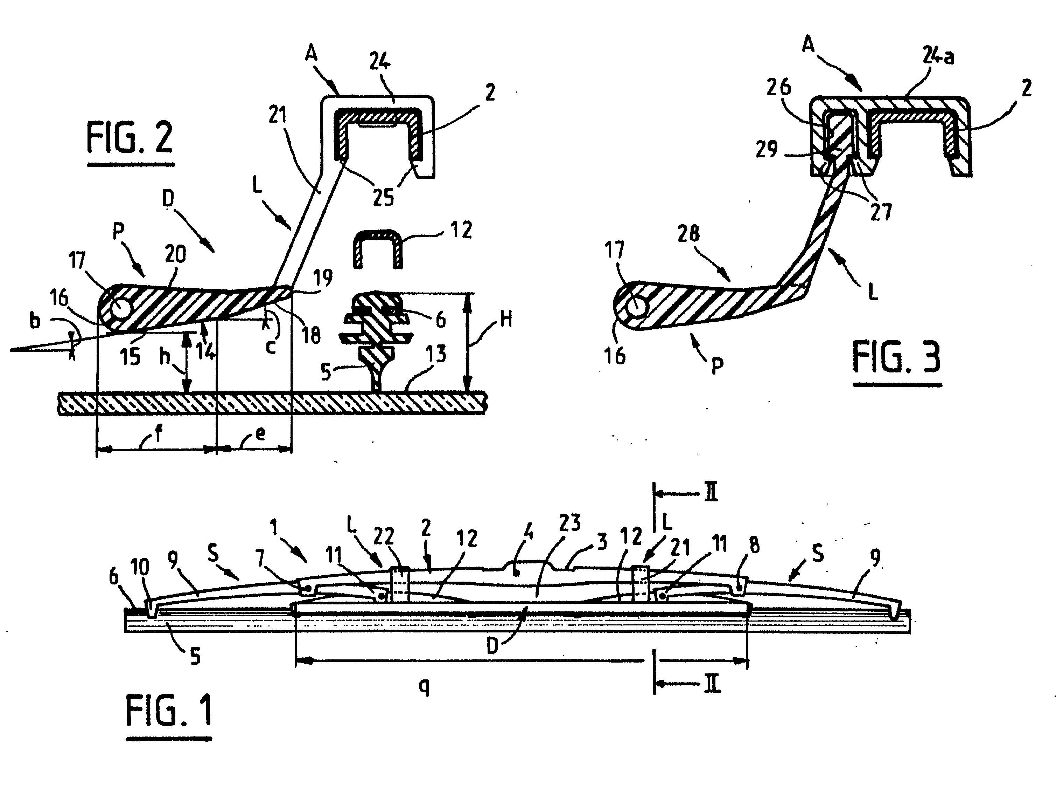

En se reportant à la figure 1 des dessins, on peut voir un balai d'essuie-glace 1 qui comprend une armature 2, constituée de préférence par un profilé à section transversale en U renversé (voir figure 2). Cette armature 2 est destinée à être portée par un bras d'essuie-glace (non représenté) ; généralement, l'armature 2 comporte, dans sa partie médiane, une ouverture 3 pratiquée dans le fond du profilé, pour le passage d'une extrémité du bras. Un axe transversal 4 s'étend, au niveau de l'ouverture 3, entre les ailes du profilé. Cet axe 4 est destiné à être engagé dans un logement de l'extrémité du bras, pour assurer une liason articulée entre le bras et l'armature 2.

Le balai 1 comporte, en outre, une raclette 5, généralement en matière élastomère, combinée avec une lame métallique flexible 6 prévue du côté éloigné de l'arête d'essuyage de la raclette.

Cette raclette 5 est portée par un système S de palonniers montés sur des articulations 7, 8 prévues aux extrémités de l'armature 2. Dans l'exemple de réalisation représenté sur la figure 1, le système de palonniers S, associé à chaque extrémité de l'armature 2, comprend un palonnier intermédiaire 9 articulé sur l'extrémité correspondante de l'armature 2. Ce palonnier 9, dont la direction moyennne, en position de repos, est sensiblement parallèle à celle de l'armature 2, supporte la raclette 5 par une griffe 10 située à son extrémité éloignée de l'axe 4.

L'autre extrémité 11 de ce palonnier 9, plus proche de l'axe 4, se trouve située entre l'armature 2 et la raclette 5 ; cette extrémité 11 porte, de manière articulée, un second palonnier 12 dont les extrémités forment des griffes supportant la raclette 5.

Du fait que les palonniers situés aux deux extrémités de l'armature 2 sont identiques, ils ont été désignés par les mêmes références numériques sur le dessin.

Le balai 1 est équipé d'un déflecteur d'air D muni de moyens d'accrochage A sur l'armature 2.

Le déflecteur D présente une partie profilée P et comporte des moyens de liaison L entre cette partie profilée et les moyens d'accrochage A, les moyens de liaison L s'étendant en direction de la surface à essuyer 13, notamment la surface d'un pare-brise de véhicule automobile.

La partie profilée P a une forme sensiblement convexe tournée vers la surface 13 à essuyer. Cette partie profilée P comporte, sur sa surface interne 14, une première zone 15 sensiblement plane s'étendant depuis un bord avant 16 vers l'arrière, c'est-à-dire vers la raclette 5.

La zone 15 est inclinée d'un angle $b$ par rapport au plan moyen de la surface 13 à essuyer. Une seconde zone 18 fait suite à la première 15 et est limitée par un bord arrière 19. L'inclinaison $c$ de cette seconde zone 18 par rapport au plan moyen de la surface 13 est supérieure à celle $b$ de la première zone 15 de telle sorte que le profil de la surface interne de la partie P est celui d'un dièdre convexe tourné vers la surface 13.

La deuxième zone 18 est plus courte que la première zone 15. Autrement dit, la distance $e$ entre l'arête du dièdre et le bord arrière 19, qui correspond à la longueur de la zone 18, est inférieure à la distance $f$ entre cette même arête du dièdre et le bord avant 16.

Dans un exemple de réalisation, non limitatif, le bord avant 16 a un rayon de 2,5 mm. La distance $f$ est égale à 15 mm, tandis que la distance $e$ est égale à 5 mm. L'angle d'inclinaison $b$ est d'environ 8°, tandis que l'angle d'inclinaison $e$ est d'environ 25°.

L'inclinaison $b$ de la première zone peut être comprise entre 4° et 20°.

Comme on peut le voir sur les dessins, une telle disposition permet d'obtenir un déflecteur dont la partie profilée présente une large partie proche de la surface à essuyer.

Les moyens de liaison L sont alors agencés, notamment au point de vue de leur longueur, de telle sorte que la partie profilée P se trouve à une distance $h$ de la surface à essuyer 13 suffisamment réduite pour créer un effet de sol produisant une dépression relativement importante au-dessous du déflecteur D, c'est-à-dire dans la zone comprise entre la surface 13 et la partie profilée P.

De préférence, la distance $h$ entre la zone de la surface interne 14 du déflecteur la plus proche de la surface à essuyer 13, et cette surface, est inférieure à la hauteur H de la raclette 5. Avantageusement, la distance $h$ est inférieure ou égale à 15 mm.

La surface externe 20 de la partie profilée P a une forme de dièdre concave, l'épaisseur de la partie P diminuant progressivement du bord avant 16 vers le bord arrière 19.

Le bord 16 a une forme arrondie, semi-cylindrique. Ce bord 16 comporte avantageusement un canal longitudinal interne 17 débouchant en direction de la surface à essuyer 13, de place en place, par une buse, non visible sur le dessin, pour l'arrosage de la surface 13. Le canal 17 est propre à être relié à un tuyau souple (non représenté) d'alimentation en un liquide de lavage de la surface 13 à essuyer.

Conformément à la réalisation des figures 1 et 2, les moyens d'accrochage A, les moyens de liaison L et la partie profilée P du déflecteur forment une seule pièce obtenue de moulage. Les moyens de liaison L sont formés par des jambes de liaison 21, 22, au nombre de deux dans l'exemple considéré, distantes l'une de l'autre. Un espace libre 23 existe entre ces jambes de liaison.

Les moyens d'accrochage A comprennent, à l'extrémité de chaque jambe 21, 22 éloignée de la partie profilée P, une pince 24 (figure 2) ayant une section sensiblement en U renversé agencée de manière à coiffer l'armature 2 et à venir s'accrocher, par des saillies 25 orientées vers l'intérieur, sur les bords des ailes de l'armature 2.

Le déflecteur D est avantageusement réalisé en matière plastique, et les branches des pinces 24 présentent une certaine élasticité leur permettant de s'encliqueter sur l'armature 2.

La figure 3 illustre une variante de réalisation dans laquelle les éléments identiques ou jouant des rôles semblables à des éléments décrits à propos des figures 1 et 2, sont désignés par les mêmes références numériques, éventuellement suivies de la lettre a, sans que leur description soit reprise. Selon cette variante, les pinces telles que 24a ont toujours une section transversale sensiblement en forme de U renversé mais sont munies d'un logement 26 situé à l'extérieur par rapport à l'armature 2 du balai. Ce logement 26, comme représenté sur la figure 3, a une section interne en U, ouverte vers le bas, la section d'entrée de ce logement étant réduite par deux saillies 27 formant crochet.

La partie profilée P et les moyens de liaison L forment une seule pièce 28, distincte des moyens d'accrochage A. Les moyens de liaison L comportent, à leur extrémité éloignée de la partie profilée P, un organe 29, formant bourrelet, ayant une section complémentaire de celle du logement 26. Cet organe 29 est propre à être engagé et fixé, par clipsage, dans le logement 26 pour assurer l'assemblage des moyens d'accrochage A et des moyens de liaison L.

La pince 24a peut recouvrir une zone réduite de l'armature 2 ou être constituée par un profilé s'étendant sur une longueur plus importante. Le logement 26 peut être constitué par une rainure.

La pièce unique 28, formée par la partie profilée P et les moyens de liaison L peut être obtenue par extrusion, auquel cas les moyens de liaison L s'étendent suivant toute la longueur du déflecteur. Si l'on souhaite que les moyens de liaison L soient formés par des jambes de liaison telles que 21, 22 (figure 1), il suffit de réaliser une opération de découpage dans la partie extrudée.

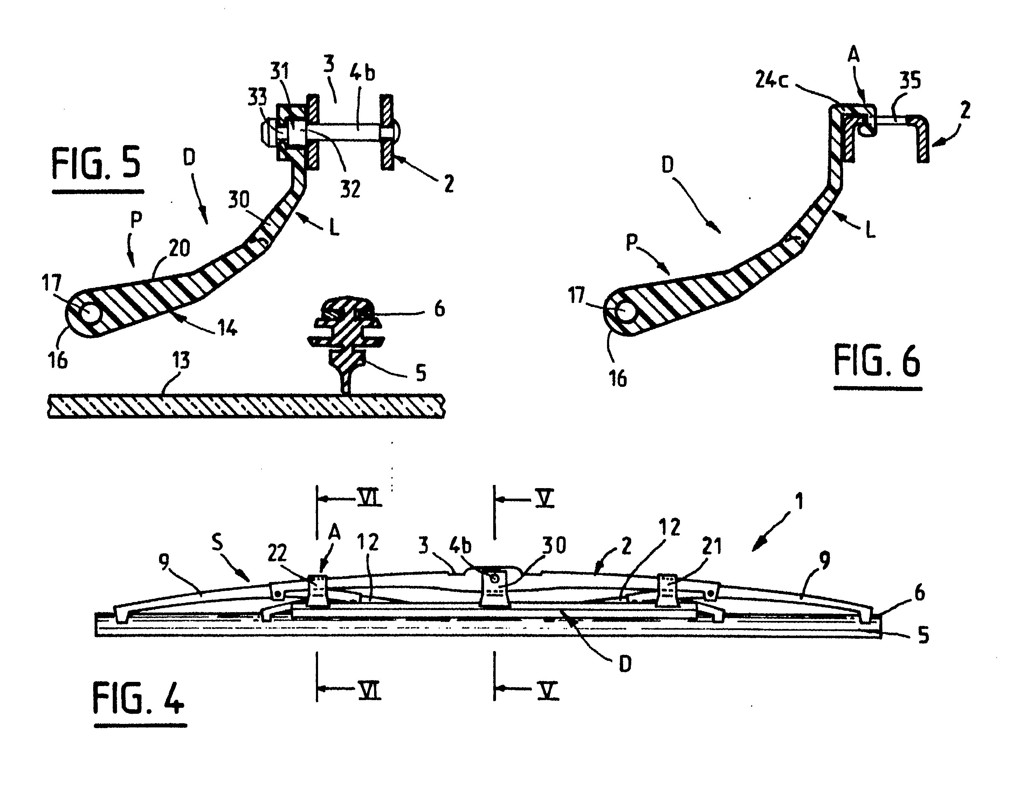

En se reportant aux figures 4 et 5, on peut voir une variante de réalisation du déflecteur D, variante pour laquelle on a utilisé les mêmes références numériques que celles des figures 1 et 2, éventuellement suivies de la lettre b, pour désigner des éléments semblables, dont la description n'est pas reprise.

Selon cette variante, les moyens d'accrochage A du déflecteur comportent une troisième patte médiane 30 propre à venir s'accrocher sur un prolongement 31 de l'axe d'articulation 4b de l'armature 2 sur le bras d'essuie-glace. Le prolongement 31 comporte une partie cylindrique 32 de diamètre supérieur à celui du trou prévu dans l'aile de l'armature 2. Cette partie 32 vient en butée extérieurement contre l'aile. Une partie de plus faible diamètre fait suite, vers l'extérieur, à la partie 32 de manière à déterminer une gorge annulaire 33 dans laquelle peut s'encliqueter un rebord circulaire 34 prévu à l'extrémité de la patte 30.

La figure 6 représente une variante de réalisation dans laquelle les pinces d'accrochage telles que 24c sont destinées à coopérer avec une armature 2 qui comporte des ouvertures telles que 35 dans son fond. La pince 24c, comme visible sur la figure 6, a sensiblement la forme d'un crochet qui s'engage dans l'ouverture 35 et dont le bec vient se glisser au-dessous d'un rebord limitant ladite ouverture. La pince 24c est ainsi accrochée sur une seule aile de l'armature 2.

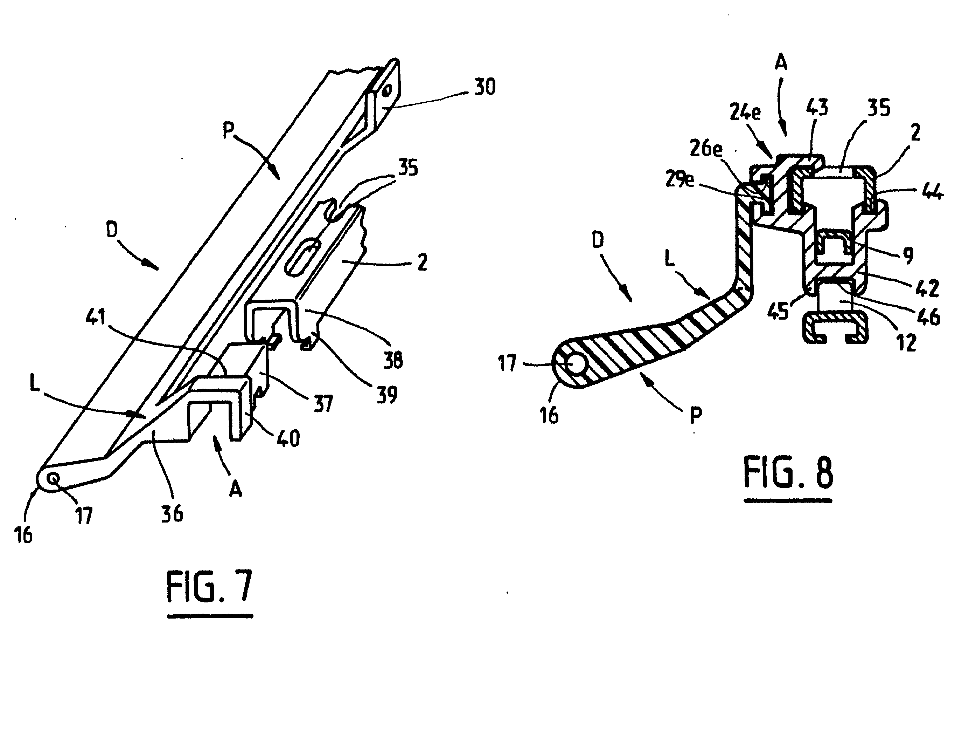

La figure 7 montre une variante de réalisation selon laquelle le déflecteur D, représenté partiellement, comporte à chacune de ses extrémités longitudinales, une patte transversale 36 (faisant partie des moyens de liaison L), qui est munie à son extrémité éloignée de la partie profilée P, d'un retour 37 sensiblement parallèle à la direction longitudinale moyenne du déflecteur D. Ce retour 37 forme un embout propre à être engagé dans une extrémité associée 38 de l'armature 2, au niveau de la zone d'articulation 39 d'un palonnier sur ladite extrémité 38. Cet embout 37 vient s'intercaler entre l'armature 2 et le palonnier (non représenté) pour agir comme élément anti-bruit.

L'embout 37 a une section transversale dont le contour extérieur est propre à épouser le contour intérieur de l'extrémité 38. Dans le cas présent, l'armature 2 ayant une section transversale en U renversé, l'embout 37 a également une section transversale en U renversé, ouverte vers le bas. La partie 40 de la patte 36 qui se raccorde à l'embout 37 a également une section en U renversé, d'épaisseur plus forte que celle de l'embout, de telle sorte qu'un épaulement extérieur 41 soit formé au raccordement de la partie 40 et de l'embout 37. Cet épaulement peut servir de butée à l'extrémité de l'armature 2.

Il est clair que l'extrémité du déflecteur D non représentée sur la figure 7 est équipée d'un embout semblable à 37 mais orienté en sens inverse. Les embouts peuvent être engagés dans les extrémités de l'armature 2 par déformation élastique du déflecteur et éventuellement de l'armature.

La figure 8 illustre une variante de réalisation de la pince de la figure 3, pour l'accrochage du déflecteur sur l'armature 2. Comme pour les figures précédentes, les éléments semblables à des éléments déjà décrits sont désignés par les mêmes références numériques, éventuellement suivies de la lettre e dans le cas de cette figure 8, sans que la description de ces éléments soit reprise.

La pince 24e de la figure 8 est agencée de manière à présenter une partie 42 propre à être engagée entre les palonniers 9 et 12 pour agir comme élément de guidage de ces palonniers.

La pince 24e comporte une partie supérieure 43 en forme de bec, propre à s'engager dans une ouverture 35 du fond de l'armature 2, ladite pince 24e étant accrochée essentiellement sur une seule aile (l'aile gauche selon la représentation de la figure 8) de l'armature 2.

La pince 24e comporte un logement 26e situé à l'extérieur par rapport à l'armature 2, et s'ouvrant latéralement. Ce logement 26e a une section transversale en T dont la jambe médiane est disposée horizontalement, selon la figure 8, du côté opposé à l'armature 2. L'organe d'accrochage 29e prévu à l'extrémité des moyens de liaison L a une forme conjuguée de celle du logement 26e.

La partie 42 de la pince 24e, destinée à servir de guidage aux palonniers, a une section transversale sensiblement en U dont la concavité est tournée en sens opposé à celle de l'armature 2. Les bords supérieurs des ailes de la partie 42 comportent chacun une gorge 44 propre à recevoir le bord inférieur de l'aile associée de l'armature 2. Le palonnier 9 est engagé dans la concavité de la partie 42 ; la distance entre les faces internes des ailes de cette partie 42 est égale à la largeur du palonnier 12 pour assurer un bon guidage.

Les ailes de la partie 42 se prolongent, vers le bas, au-delà du fond transversal de cette partie 42, de manière à former, de chaque côté un épaulement 45. Un logement 46, ouvert vers le bas, est ainsi déterminé par la surface extérieure du fond de la partie 42 et chaque épaulement latéral 45. Ce logement 46 reçoit une zone du palonnier 12 et en assure le guidage.

Lorsque la surface à essuyer est galbée, le déflecteur est prévu en plusieurs tronçons raccordés aux différents palonniers du balai d'essuie-glace, ce qui permet d'obtenir que la surface profilée suive au mieux ladite surface.

Quelle que soit la réalisation adoptée, le déflecteur D conforme à l'invention permet d'obtenir un effet de sol et de créer une dépression relativement importante dans la zone comprise entre le déflecteur et le pare-brise, ce qui permet d'appliquer correctement la raclette contre la surface à essuyer.

L'effet de sol peut être complété par un effet de jupe en prévoyant à chaque zone d'extrémité du déflecteur, monté sur le balai, une enveloppe souple qui permettrait de maintenir la dépression. Cette enveloppe entourant de chaque côté l'extrémité du balai, dans la zone de non-effet du déflecteur, se présenterait sous la forme d'un U renversé fermé à celle de ses extrémités voisine de l'extrémité du balai et fixé par tout moyen approprié sur le palonnier 9 ou sur l'extrémité du balai.

Le déflecteur peut être réalisé en matière plastique, notamment polypropylène ou polyamide. Les moyens d'accrochage A, lorsqu'ils sont constitués par des pinces indépendantes des moyens de liaison L (réalisation des figures 3 et 8), peuvent être réalisés en matière plastique ou en métal.

L'efficacité du déflecteur permet de lui donner une longueur $q$ (figure 1) relativement réduite, par exemple comprise entre 1/3 et 2/3 de la longueur de la raclette 5.

Lors de l'essuyage sur un pare-brise incliné, le véhicule automobile étant en mouvement, l'essuyage est facilité lors de la course de montée car le vent relatif pousse le balai d'essuie-glace dans le même sens que le moteur d'entraînement, tandis que lors de la course de descente, l'essuyage est freiné par le vent relatif qui s'oppose au mouvement provoqué par le moteur d'entraînement.

Il peut en résulter des différences entre la vitesse de montée et la vitesse de descente du balai d'essuie-glace.

Dans le cas d'un balai d'essuie-glace équipé d'un déflecteur selon l'invention, on a constaté, d'une manière surprenante, que la vitesse de descente du balai d'essuie-glace, alors que le véhicule est en mouvement, reste sensiblement égale à la vitesse de montée.

Afin d'éviter que, lors des retournements, le bord avant entre en contact avec la surface à essuyer, la demanderesse propose, en variante, de fixer des éléments de caoutchouc à la surface inférieure dudit bord avant. Ces éléments pourraient, par exemple, être formés à partir d'éléments de lèvre de raclette.

Ces éléments de caoutchouc sont de dimensions telles qu'ils n'entrent pas en contact avec la surface à essuyer lors du cycle d'essuyage.

## Revendications

1. Déflecteur pour balai d'essuie-glace porté par un bras d'essuie-glace, du genre comportant des moyens d'accrochage (A) sur ledit balai ou ledit bras et une partie profilée (P) de forme globalement convexe tournée à l'opposé des moyens d'accrochage (A), caractérisé en ce que ladite partie profilée (P) comporte, sur sa face intérne (14) faisant face à la surface (13) à essuyer, une première zone (15) sensiblement plane s'étendant depuis un bord avant (16) vers l'arrière, faiblement inclinée par rapport au plan moyen de la surface à essuyer, et une seconde zone (18) faisant suite à la première et limitée par un bord arrière (19) d'inclinaison $c$ par rapport à la surface à essuyer supérieure à l'inclinaison $b$ de la première zone (15).

2. Déflecteur selon la revendication 1, caractérisé en ce que ladite première zone (15) est inclinée d'un angle $b$ entre 4° et 20° et de préférence d'environ 8° par rapport à la surface à essuyer.

3. Déflecteur selon l'une des revendications précédentes, caractérisé en ce que ladite seconde zone (18) est plus courte que ladite première zone et est inclinée d'environ 25° par rapport à la surface à essuyer.

4. Déflecteur selon l'une des revendications précédentes, caractérisé en ce que les moyens de liaison (L) entre la partie profilée (P) et les moyens d'accrochage (A) sont tels que la zone de la partie profilée (P) la plus proche de la surface à essuyer (13) se trouve à une distance $h$ réduite de ladite surface à essuyer, ladite distance $h$ étant de préférence inférieure à la hauteur (H) de la raclette que porte le balai d'essuie-glace.

5. Déflecteur selon la revendication 4, caractérisé en ce que la distance $h$ de la partie profilée (P) à la surface à essuyer est inférieure ou égale à 15 mm.

6. Déflecteur selon l'une quelconque des revendications précédentes, caractérisé en ce que les moyens d'accrochage (A), les moyens de liaison (L) et la partie profilée (P) du déflecteur forment une seule pièce obtenue de moulage.

7. Déflecteur selon l'une quelconque des revendications précédentes caractérisé par le fait que les moyens de liaison (L) sont formés par des jambes de liaison (21, 22) distantes l'une de l'autre, un espace (23) existant entre les jambes de liaison.

8. Déflecteur selon l'une quelconque des revendications précédentes, caractérisé en ce que les moyens d'accrochage (A) comprennent des pinces (24, 24$a$, 24$c$, 24$e$) propres à s'encliqueter, notamment sur l'armature (2) du bras d'essuie-glace.

9. Déflecteur selon l'une quelconque des revendications précédentes, caractérisé en ce que les moyens d'accrochage (A), notamment les pinces (24a, 24e) sont munis d'un logement (26, 26e) situé à l'extérieur par rapport à l'armature (2) du balai d'essuie-glace, tandis que la partie profilée (P) et les moyens de liaison (L) forment une seule pièce (28) distincte des moyens d'accrochage (A), lesdits moyens de liaison (L) comportant à leur extrémité éloignée de la partie profilée un organe (29, 29e) ayant une section complémentaire de celle du logement (26) des moyens d'accrochage, cet organe étant propre à être engagé et fixé, notamment par clipsage, dans ledit logement (26, 26e) pour assurer l'assemblage des moyens d'accrochage (A) et des moyens de liaison (L).

10. Déflecteur selon l'une quelconque des revendications 1 à 6, caractérisé en ce fait que le déflecteur (D) comporte, à chacune de ses extrémités longitudinales, une patte transversale (36) munie d'un retour (37), sensiblement parallèle à la direction longitudinale moyenne du déflecteur, formant embout propre à être engagé dans une extrémité associée (38) de l'armature (2), au niveau de la zone d'articulation (39) d'un palonnier sur ladite extrémité de l'armature, cet embout (37) venant s'intercaler entre l'armature (2) et le palonnier pour agir comme élément anti-bruit.

**Patentansprüche**

1. Ablenkblech für Scheibenwischerblatt, befestigt an einem Wischarm, von der Art, die Mittel zum Einhaken (A) am genannten Wischblatt oder am genannten Arm und einen Profilteil (P) von allgemein konvexer Form aufweist, der den Einhakmitteln (A) gegenüberliegt, dadurch gekennzeichnet, daß der genannte Profilteil (P) an der Innenfläche (14), die an der zu reinigenden Fläche (13) anliegt, eine erste, im wesentlichen flache Zone (15) besitzt, die sich von einem vorderen Rand (16) nach hinten erstreckt und im Verhältnis zur mittleren Ebene der zu reinigenden Fläche leicht geneigt ist, sowie eine zweite Zone (18), die auf die erste folgt und durch einen hinteren Rand (19) mit der Neigung c im Verhältnis zur oberen zu reinigenden Fläche mit einer Neigung b der ersten Zone (15) begrenzt ist.

2. Ablenkblech nach Anspruch 1, dadurch gekennzeichnet, daß die genannte erste Zone (15) um einen Winkel b zwischen 4° und 20° und vorzugsweise ca. 8° im Verhältnis zur zu reinigenden Fläche geneigt ist.

3. Ablenkblech nach einem der vorherigen Ansprüche, dadurch gekennzeichnet, daß die genannte zweite Zone (18) kürzer ist als die genannte erste Zone und daß sie im Verhältnis zur zu reinigenden Fläche um ca. 25° geneigt ist.

4. Ablenkblech nach einem der vorherigen Ansprüche, dadurch gekennzeichnet, daß die Verbindungsmittel (L) zwischen dem Profilteil (P) und den Einhakmitteln (A) so beschaffen sind, daß die Zone des Profilteils (P), die der zu reinigenden Fläche (13) am nächsten liegt, einen reduzierten Abstand (h) von der zu reinigenden Fläche aufweist, wobei der genannte Abstand (h) vorzugsweise kleiner ist als die Höhe (H) des Wischblatthalters.

5. Ablenkblech nach Anspruch 4, dadurch gekennzeichnet, daß der Abstand (h) des Profilteils (P) zur zu reinigenden Fläche höchstens 15 mm beträgt.

6. Ablenkblech nach einem der vorherigen Ansprüche, dadurch gekennzeichnet, daß die Einhakmittel (A), die Verbindungsmittel (L) und der Profilteil (P) des Ablenkblechs ein einziges Preßteil bilden.

7. Ablenkblech nach einem der vorherigen Ansprüche, dadurch gekennzeichnet, daß die Verbindungsmittel (L) aus Verbindungsschenkeln (21, 22) bestehen, die durch einen Abstand (23) zwischen den Verbindungsschenkeln getrennt sind.

8. Ablenkblech nach einem der vorherigen Ansprüche, dadurch gekennzeichnet, daß die Einhakmittel (A) insbesondere die Zangen (24, 24a, 24c, 24e) einschließen, die besonders am Bügel (2) des Wischarms einrasten können.

9. Ablenkblech nach einem der vorherigen Ansprüche, dadurch gekennzeichnet, daß die Einhakmittel (A), insbesondere die Zangen (24a, 24e) mit einer Aufnahme (26, 26e) versehen sind, die außerhalb des Scheibenwischerbügels (2) liegt, während der Profilteil (P) und die Verbindungsmittel (L) ein einziges Stück (28) bilden, welches sich von den Einhakmitteln (A) unterscheidet, wobei die genannten Verbindungsmittel (L) an dem vom Profilteil entfernten Ende ein Organ (29, 29e) aufweisen, dessen Querschnitt zu dem der Aufnahme (26) der Einhakmittel paßt, und wobei dieses Organ dazu geeignet ist, insbesondere mit Hilfe von Klemmen in die genannte Aufnahme (26, 26e) einzurasten und darin befestigt zu werden, um den Zusammenbau der Einhakmittel (A) und der Verbindungsmittel (L) zu gewährleisten.

10. Ablenkblech nach einem der Ansprüche 1 bis 6, dadurch gekennzeichnet, daß das Ablenkblech (D) an jedem seiner Längsenden eine Querlasche (36) aufweist, die mit einem Rücksprung (37) im wesentlichen parallel zur mittleren Längsrichtung des Ablenkblechs versehen ist, so daß ein Ansatz entsteht, der in ein entsprechendes Ende (38) des Bügels (2) in Höhe des Gelenkbereichs (39) einer Traverse am genannten Ende des Bügels eingreifen kann, wobei sich dieser Ansatz (37) zwischen dem Bügel (2) und der Traverse einfügt und dadurch als Lärmschutzelement dient.

**Revendications**

1. A deflector for a windscreen wiper blade carried by a windscreen wiper arm, of the kind comprising attachment means (A) for attachment of the deflector on the said blade or the said arm, and a profiled portion (P), having a generally convex profile facing away from the attachment means (A), characterised in that the said profiled portion (P) includes, on its inner face (14) facing towards the surface (13) to the wiped, a first, substantially flat zone (15) which extends rearwardly from a leading edge (16) and which is slighly inclined with respect to the mean plane of the surface to be wiped, and a second zone (18) following on form the first zone delimited by a rear edge (19), having with respect to the surface to be wiped an inclination c which is greater than the inclination b of the first zone (15).

2. A deflector according to Claim 1, characterised in that the said first zone (15) is inclined at an angle b between 4 and 20 degrees, and preferably about 8 degrees, with respect to the surface to be wiped.

3. A deflector according to either one of the preceding Claims, characterised in that the said second zone (18) is shorter than the said first zone and is inclined by about 25 degrees with respect to the surface to be wiped.

4. A deflector according to one of the preceding Claims, characterised in that the connecting means (L) between the profiled portion (P) and the attachment means (A) are such that the zone of the profiled portion which is closest to the surface (13) to be wiped lies at a reduced distance (h) from the said surface to be wiped, with the said distance (h) being preferably smaller than the height (H) of the wiping element which is carried by the windscreen wiper blade.

5. A deflector according to Claim 4, characterised in that the distance (h) from the profiled portion (P) to the surface to be wiped is less than or equal to 15 mm.

6. A deflector according to any one of the preceding Claims, characterised in that the attachment means (A), the connecting means (L) and the profiled portion (P) of the deflector form a single moulded member.

7. A deflector according to any of the preceding Claims, characterised by the fact that the connecting means (L) comprise connecting legs (21, 22) which are spaced from each other, with a space (23) being defined between the connecting legs.

8. A deflector according to any one of the preceding Claims, characterised in that the attachment means (A) include jaw elements (24, 24a, 24c, 24e) adapted to engage with a snap fit on the windscreen wiper arm, and in particular on the armature (2) of the latter.

9. A deflector according to any one of the preceding Claims, characterised in that the attachment means (A), and in particular the jaw elements (24a, 24e), are formed with a housing portion (26, 26e) arranged on the outside with respect to the armature (2) of the windscreen wiper arm, while the profiled portion (P) and the connecting means (L) include, at the end thereof furthest from the profiled portion, a member (29, 29e) having a cross section complementary to that of the housing portion (26) of the connecting means, the said member being adapted to be engaged an secured, in particular by means of snap fit, in the said housing portion (26, 26e) so as to effect the assembly of the attachment means (A) and the connecting means (L).

10. A deflector according to any one of Claims 1 to 6, characterised in that the deflector (D) includes, at each of its longitudinal ends, a transverse lug (36) having a return portion (37), which is substantially parallel to the mean longitudinal direction of the deflector, and which constitutes an end stop adapted to be engaged in an associated end portion (38) of the armature (2), in the region of the zone (39) in which bar is pivoted on the said end portion of the armature, with the said end stop (37) intervening between the armature (2) and the swing bar so as to act as a shock absorbing element.

FIG. 1

FIG. 2

FIG. 3

FIG. 5

31 3 4b
33
32
2
D
P
30
L
20
17
14
16 13
6
5

A
24c 35
2
D
P
L
17
16
FIG. 6

EP 0 311 471 B1

VI V
S A 3 4b 30 2 12 1
9 22 12 21 9
6
5
D
VI V
FIG. 4

FIG. 8

FIG. 7